# EUROPEAN PATENT APPLICATION

(11) **EP 3 756 859 A1**
(43) Date of publication of application: **30.12.2020**
(21) Application number: 19757234.0
(22) Date of filing: 04.02.2019
(51) Int. Cl.: B29C 64/153, B22F 3/105, B22F 3/16, B29C 64/393, B33Y 10/00, B33Y 30/00, B33Y 50/02

(54) **SYSTEM FOR MANUFACTURING ADDITIVE MANUFACTURED OBJECT AND METHOD FOR MANUFACTURING ADDITIVE MANUFACTURED OBJECT**

(30) Priority: 23.02.2018 JP 2018030765
(71) Applicant: Hitachi, Ltd., Tokyo 100-8280 (JP)
(72) Inventor: KAWANAKA Hirotsugu, Tokyo 100-8280 (JP); AOTA Kinya, Tokyo 100-8280 (JP); YANG Yingjuan, Tokyo 100-8280 (JP); OONUMA Atsuhiko, Tokyo 100-8280 (JP)
(74) Representative: MERH-IP Matias Erny Reichl Hoffmann Patentanwälte PartG mbB
(86) International application number: PCT/JP2019/003795
(87) International publication number: WO 2019/163495

(57) **Abstract**

A manufacturing system of an additive manufacturing body is provided, by which the accuracy of evaluating a defect during additive manufacturing and the quality the body can be improved.

A manufacturing system (1a) of an additive manufacturing body of the present invention includes: an additive manufacturing device (10a); an inspection device (20) having a camera (6, 7) for photographing the powder layer or the solidified layer; and a control device (30) that controls the additive manufacturing device (10a) and the inspection device (20), in which: the camera (6, 7) can photograph the powder layer for each powder layer forming step that is performed repeatedly, or can photograph the solidified layer for each solidified layer forming step that is performed repeatedly; and the control device (30) selects a photographing condition of the camera (6, 7) according to the conditions of the additive manufacturing process.

## Description

### Technical Field

The present invention relates to a manufacturing system of an additive manufacturing body and a manufacturing method of an additive manufacturing body.

### Background Art

Conventionally, an additive manufacturing technology is known, in which a three-dimensional manufacturing object (additive manufacturing body) is manufactured by: creating a manufacturing surface by depicting a two-dimensional flat surface by selectively melting and solidifying a powder bed (powder layer) in which metal powder is spread; and repeatedly layering the manufacturing surface multiple times. In this case, a defect may occur inside the additive manufacturing body (hereinafter, referred to as an "AM body") in the middle of the additive manufacturing, depending on manufacturing conditions. It has been empirically known that this intrinsic defect occurs due to the application state of the powder layer, the melting and solidification state of the powder layer, or the surface state of a solidified layer before the lamination.

As a technique for inspecting a defect that has occurred during additive manufacturing, the following Patent Literature 1 can be cited. In Patent Literature 1, a three-dimensional manufacturing object manufacturing apparatus, including a manufacturing unit and an inspection unit, is described (claim 1). The manufacturing unit manufactures a three-dimensional manufacturing object in which a plurality of solidified layers are layered. The three-dimensional manufacturing object is manufactured by repeating: forming a layered solidified layer by performing a solidification process on a material located in an area set according to the shape of the three-dimensional manufacturing object to be manufactured; and forming a new solidified layer by performing a solidification process on a new material that has been newly supplied to the upper portion of the formed solidified layer. The inspection unit inspects the already layered solidified layer in the middle of layering the plurality of solidified layers. It is described that the inspection unit uses an X-ray inspection device, a gamma ray inspection device, or the like (Description paragraphs 0013 and 0063).

In Patent Literature 2, a manufacturing method of a three-dimensional object is described, in which: the object is formed by solidifying, for each layer unit, a powder material at a position corresponding to the object in each layer; IR radiation emitted from the applied powder layer is detected locally, whereby an IR radiation image is obtained; a defect and/or a geometric irregularity of the applied powder layer are/is detected based on the IR radiation image; the solidification is performed by hitting the applied powder layer with electromagnetic radiation or particle radiation; and the defect and/or the geometric irregularity are/is corrected by applying and forming an additional layer before solidifying the powder layer (claim 1).

In Patent Literature 3, a manufacturing method of a three-dimensional manufacturing body is disclosed (claim 1). The manufacturing method includes the steps of: a) forming a powder bed on the surface of a substrate by using a dispenser; b) flattening the powder bed with a flattening device; and c) solidifying the powder bed in a predetermined area of the powder bed by combining the powder in the powder bed with a binder solution or by melting or sintering the powder with a radiation ray emitted, in which a defect site in the flat surface of the powder bed is evaluated by recording, during any one of (a) to (c), an optical observation image of the powder bed after being flattened or solidified.

### Citation List

### Patent Literature

Patent Literature 1: International Publication No. WO 2016/143137
Patent Literature 2: Japanese Patent No. 4964307
Patent Literature 3: US Patent Application Publication No. 2004/0173946

### Summary of Invention

### Technical Problem

In the techniques described in the above Patent Literatures, however, influences of: the material of the manufacturing object; and the temperature, atmosphere, and amount of heat input to the powder layer at the manufacturing are not taken into consideration at the evaluation. Therefore, there has been room for an improvement in the accuracy of the evaluation results.

In view of the above circumstances, a purpose of the present invention is to provide a manufacturing system of an additive manufacturing body and a manufacturing method of an additive manufacturing body, by which the accuracy of evaluating a defect during additive manufacturing can be improved and the quality of an additive manufacturing body can be improved.

### Solution to Problem

In order to achieve the above purpose, a first aspect of the present invention is a manufacturing system of an additive manufacturing body. The manufacturing system includes: an additive manufacturing device that performs an additive manufacturing process in which the step of forming a powder layer by supplying powder and the step of forming a solidified layer by supplying heat to the powder layer from a heat source to melt and solidify the powder are repeatedly performed; an inspection device having a camera for photographing the powder layer or the solidified layer; and a control device that controls the additive manufacturing device and the inspection device, in which: the camera can photograph the powder layer for each step of forming a powder layer, the step being performed repeatedly, or can photograph the solidified layer for each step of forming a solidified layer, the step being performed repeatedly; and the control device selects a photographing condition of the camera according to a condition of the additive manufacturing process.

A second aspect of the present invention is a manufacturing method of an additive manufacturing body. The manufacturing method includes the steps of: forming a powder layer by supplying powder; photographing the powder layer with a camera; determining whether the state of the powder layer is good or bad, based on an image obtained by the camera; when the state of the powder layer is determined to be good, forming a solidified layer by supplying heat to the powder layer from a heat source to melt and solidify the powder; photographing the solidified layer with the camera; and determining whether the state of the solidified layer is good or bad, based on an image obtained by the camera, in which a photographing condition of the camera is selected according to the conditions of the step of forming a powder layer and the step of forming a solidified layer.

More specific configuration of the present invention will be described in CLAIMS.

### Advantageous Effects of Invention

According to the present invention, a manufacturing system of an additive manufacturing body and a manufacturing method of an additive manufacturing body can be provided, by which the accuracy of evaluating a defect during additive manufacturing can be improved and the quality of an additive manufacturing body can be improved.

Problems, configurations, and advantageous effects other than those described above will be clarified by the following description of embodiments.

### Brief Description of Drawings

Fig. 1 is a schematic view illustrating a first example of a manufacturing system of an additive manufacturing body of the present invention.
Fig. 2 is a schematic view illustrating part of an additive manufacturing device in Fig. 1 and a visible light image processing unit of a control device.
Fig. 3 is a schematic view illustrating part of the additive manufacturing device in Fig. 1 and an infrared image processing unit of the control device.
Fig. 4 is a schematic view illustrating a second example of the manufacturing system of an additive manufacturing body of the present invention.
Fig. 5 is a schematic view illustrating a third example of the manufacturing system of an additive manufacturing body of the present invention.
Fig. 6 is a flow chart showing a manufacturing method of an additive manufacturing body of the present invention. Description of Embodiments

### [Basic Idea of Invention]

A visible light image and an infrared image are mainly used for observing a solidified layer during additive manufacturing. With the visible light image, the application state of a powder layer and presence or absence of a vacancy, crack, and unmelted portion in the solidified layer can be evaluated. With the infrared image, a heat pool in a melted portion can be detected. These evaluation results vary depending on conditions such as the material and size (thickness) of an AM body and the atmosphere, temperature, and amount of heat input from a heat source at additive manufacturing. Therefore, in order to evaluate an AM body with high accuracy, it should be evaluated in view of these conditions.

In the technique for inspecting a defect by using an X-ray or gamma ray of the above Patent Literature 1, there is the problem that it takes time to detect a defect, and further it is assumed that the accuracy of the detection may be affected by a manufacturing thickness. In Patent Literature 1, reference is not made to the evaluation in view of a manufacturing thickness.

On the other hand, in Patent Literature 2, "These defects and/or irregularities in a newly applied powder layer are detected, after power is applied, with an infrared camera based on different temperatures and/or different emissivities and/or different reflectivities. At the same time, an area having different layer thicknesses is reproduced by different colors each indicating the surface characteristic of a layer. Therefore, each layer that has been newly applied can be observed by image processing of a color image, in which an actual value is compared with a target value for each layer," is described (Description Paragraph 0017), and it is an effective means to determine irregularities such as surface unevennesses. According to the method and apparatus described in Patent Literature 2, however, the state of a powder material can be detected with an infrared camera, but there is the problem that the shape after the powder material is solidified, that is, the shape of an object while being subjected to an additive manufacturing process cannot be measured. Additionally, there is another problem that it is difficult to determine an exact location and a bad signal can only be detected.

In the case of Patent Literature 3, a state can be visualized, but in the determination only from an image, conditions, such as the material and size (thickness) of an AM body and the atmosphere, temperature, and amount of heat input from a heat source at additive manufacturing, are not taken into consideration, and hence there is the problem that a variation is likely to occur in the accuracy of determining an unevenness that could become a defect factor.

So, the present invention has taken into consideration the conditions such as the material and size (thickness) of an AM body and the atmosphere, temperature, and amount of input heat at additive manufacturing, whereby a system, by which an AM body can be evaluated with higher accuracy than before, has been built. Hereinafter, a manufacturing system of an additive manufacturing body and a manufacturing method of an additive manufacturing body of the present invention will be described with reference to the drawings.

### [Manufacturing System of Additive Manufacturing Body]

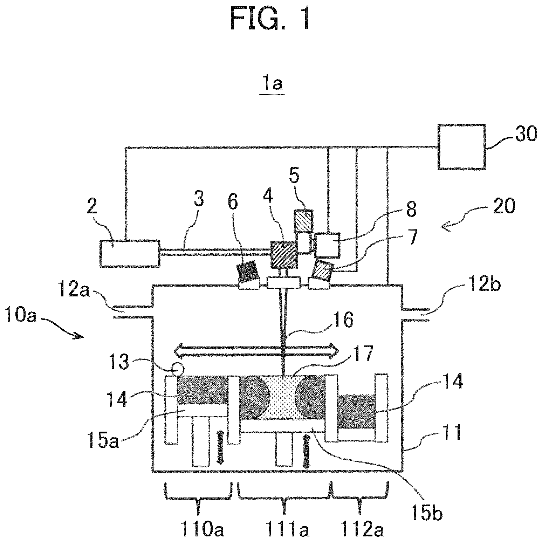

Fig. 1 is a schematic view of a first example of a manufacturing system of an additive manufacturing body of the present invention. As illustrated in Fig. 1, a manufacturing system 1a of an additive manufacturing body of the present invention roughly includes: an additive manufacturing device 10a that performs an additive manufacturing process; an inspection device 20 that evaluates a powder layer and a solidified layer formed in the additive manufacturing device 10a; and a control device 30 that controls the additive manufacturing device 10a and the inspection device 20.

The additive manufacturing device 10a of the present invention is a metal three-dimensional additive manufacturing device of a powder bed fusion type, by which a manufacturing object is manufactured: by forming a solidified layer having a two-dimensional flat surface by irradiating a powder layer, in which metal powder (raw material powder) that is the material of an AM body is spread, with energy; and by repeatedly layering the solidified layer.

In Fig. 1, as a heat source supply device for solidifying a powder layer constituted by raw material powder 14, a laser light emitting device is included, which has a laser oscillator 2, a process fiber 3, a galvano head 4, and a laser coaxial lighting 5. There is no particular restriction on the heat source supply device as far as it can melt and solidify powder, and an electron beam emitting device may be used other than the laser light emitting device.

A processing chamber 11 where an AM body 17 is manufactured has a gas supply pipe 12a and a gas exhaust pipe 12b, and has a configuration by which the atmosphere of the processing chamber 11 can be controlled. For example, when laser light is used as the heat source, the controlling the atmosphere is performed in an inert gas atmosphere or a vacuum atmosphere, and when electron beams are used as the heat source, it is performed in a vacuum atmosphere.

The inside of the processing chamber 11 is divided into: a raw material powder storage area 110a where the raw material powder 14 of an AM body is stored; an additive manufacturing area 111a where a powder layer, in which the raw material powder 14 is layered, is formed and a solidified layer is formed by melting and solidifying the powder layer with the heat source supply device; and a raw material recovery area 112a where the raw material left over when the power layer is formed in the additive manufacturing area 111a is recovered.

A powder feeder (powder spreader) 13 moves in the direction of the white arrow in Fig. 1, in order to supply powder to the additive manufacturing area 111a from the raw material powder storage area 110a. As the powder feeder 13, for example, a recoater, a coater, a squeegee, and a blade can be used. In the raw material powder storage area 110a and the additive manufacturing area 111a, sample tables 15a and 15b on which powder is placed have a configuration in which they can move up and down in the direction of the black arrow in Fig. 1. Although not illustrated, the sample table 15b on which additive manufacturing is performed may include a heater that can heat the powder layer or the solidified layer. As the heater, what can heat to approximately 25 to 650°C is preferable. By heating the powder layer or the solidified layer, effects can be obtained, in which: manufacturing speed is improved by removing water from the raw material powder or by reducing the amount of beam input heat; and distortion is reduced by uniforming a temperature distribution.

The inspection device 20 of the present embodiment includes a visible light imaging camera 6, an infrared imaging camera 7, and a molten pool observation machine 8. The visible light imaging camera 6 observes images within a visible light range of the powder layer and the solidified layer. The infrared imaging camera 7 photographs infrared radiation images of the powder layer and the solidified layer, and determines irregularities by analyzing the obtained thermal image. If a defect occurs inside the solidified layer, a thermal conductivity becomes low and a thermal diffusivity also becomes low. Therefore, by performing thermal image analysis with infrared radiation after the heat of the solidified layer is dissipated for a certain period, in order to analyze a heat pool, an internal defect can be estimated. With the determination by analyzing an image within a visible light range and with the highly accurate determination of irregularities by an infrared thermal image, the accuracy of determining a visible light image can be enhanced. The molten pool observation machine 8 observes a state occurring when the powder layer is melted by being irradiated with a heat source.

As for the infrared imaging camera 7, it is preferable to momentarily heat the powder layer and the solidified layer before their images are photographed. With the momentary heating, the temperature of the solidified layer is uniformed by heat conduction. When an image of the solidified layer is photographed, it is preferable that the temperature of the surface of the solidified layer is 60°C or higher, and more preferable that the temperature is 100°C or higher. When the temperature of the solidified layer is 60°C or higher, a heat pool is photographed clearly, so that it can be easily discovered. At this time, heat transfer to the powder having a greatly different thermal conductivity is blocked. The unevennesses occurring in the solidified layer, which could become a defect factor, also create a temperature difference. By comparing the thermal image at this time with a visible light image, a defect site can be determined.

As the heat source for the momentary heating, a heat source supply device to be used for solidifying the powder layer may be used, or an infrared lamp or the like, which is provided separately from the heat source supply device, may be used. It is preferable to change the condition of this heating according to the kind of the raw material powder 14 or the temperatures and manufacturing atmospheres of the powder layer and the solidified layer. This is because: an amount of heat, to the extent in which the surface states of the solidified layer and the powder layer are not changed, is needed; and it is necessary not to cause a variation in analyzing an image.

The control device 30 is connected to the additive manufacturing device 10a and the inspection device 20 by wired or wireless connection in order to control their operations. The drive of the powder feeder 13 and the sample tables 15a, 15b and the operations of the laser oscillator 2 and the galvano head 4 are also controlled and monitored by the control device 30.

The control device 30 also determines whether the powder layer and the solidified layer are good or bad, based on the evaluation results of the inspection device 20. The control device includes: a visible light image processing unit that processes the image obtained from the visible light imaging camera 6 and determines the presence or absence of a defect; and an infrared image processing unit that processes the image obtained from the infrared imaging camera 7 and determines the presence or absence of a defect. Hereinafter, these two processing units will be described.

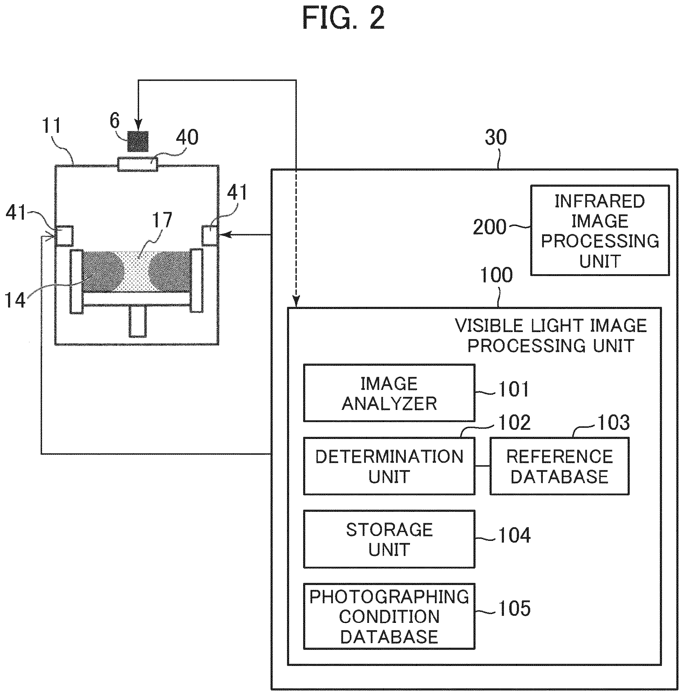

Fig. 2 is a schematic view illustrating part of the additive manufacturing device in Fig. 1 and the visible light image processing unit of the control device. Although not illustrated in Fig. 1, the processing chamber 11 is provided with a visible light transmission lens 40 and a lighting 41 for visible light imaging, as illustrated in Fig. 2.

The visible light image processing unit 100 in the control device 30 includes: an image analyzer 101 that analyzes the image obtained by the visible light imaging camera 6; a determination unit 102 that determines, based on the result analyzed by the image analyzer 101, whether the powder layer or the solidified layer is good or bad; a reference database 103 for the determination; a storage unit 104 that stores a determination result; and a photographing condition database 105 that stores photographing conditions of the visible light imaging camera 6. Photographing a visible light image with the visible light imaging camera 6 is performed based on the photographing conditions stored in the photographing condition database 105. The photographing is performed under the photographing conditions (the timing and exposure time of photographing, the illuminance of the lighting 41 for visible light imaging, etc.) determined based on the conditions such as the material and size (thickness) of the powder layer and the atmosphere, temperature, and amount of input heat at additive manufacturing, which have been registered in advance or measured at the photographing. The control device 30 photographs, based on these photographing conditions, a visible light image by operating the visible light imaging camera 6 and the lighting 41 for visible light imaging at the respective operation timings.

The data on the photographed image are analyzed by the image analyzer 101, and the determination on pass/failure is made with the determination unit 102 comparing with the reference database 103. The reference data to be stored in the reference database 103 may be one created by the control device 30, or one brought from the outside of the manufacturing system 1a of an additive manufacturing body.

The photographed image and the determination information are stored in the storage unit 104, which will serve as the inspection information for an AM body. In the defect inspection, the accuracy of the inspection determination can be improved by creating and updating a database in which: manufacturing data such as beam emitting conditions (beam power, speed, spot size, etc.), a particle distribution of the raw material powder, the manufacturing atmosphere, and the thickness of the powder layer; monitoring data; and evaluation data on a manufacturing object, are combined.

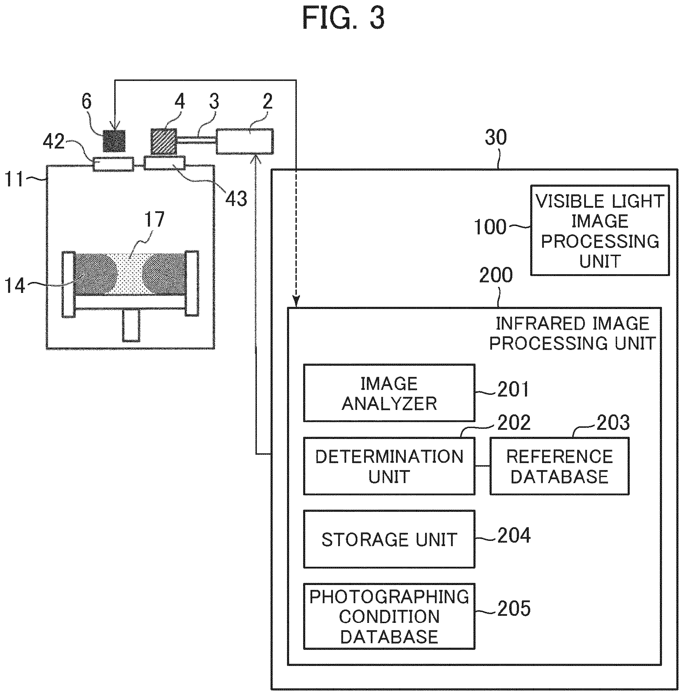

Fig. 3 is a schematic view illustrating part of the additive manufacturing device in Fig. 1 and the infrared image processing unit of the control device. Although not illustrated in Fig. 1, the processing chamber 11 is provided with an infrared transmission lens 42 and a laser guide lens 43, as illustrated in Fig. 3. In Fig. 3, the heating necessary for obtaining a thermal image is performed by using the laser light emitting device.

The infrared image processing unit 200 is also provided with an image analyzer 201, a determination unit 202, a reference database 203 for determination, a storage unit 204, and a photographing condition database 205, similarly to the visible light image processing unit 100. The photographing with the infrared imaging camera 7 is performed under the photographing conditions (the timing of photographing, the beaming condition of laser light, etc.) determined based on the conditions such as the material and size (thickness) of an AM body and the atmosphere, temperature, and amount of input heat at additive manufacturing, which have been registered in advance or measured at the photographing, similarly to the photographing with the visible light imaging camera 6. For example, a thermal conductivity varies depending on the atmosphere at additive manufacturing, and hence the timing of the measurement of a thermal image after being heated changes. Therefore, the photographing timing is changed according to a heating method, the material, and the atmospheric temperature.

The data on the photographed image are analyzed by the image analyzer 201, and the determination of good or bad is made with the determination unit 202 comparing with the reference database 203. The photographed image and the determination information are stored in the storage unit 204, which will serve as the inspection information for an AM body.

The control device 30 determines whether the surface state of the solidified layer is good or bad by integrating or correcting the visible light image determination result in the visible light image processing unit 100 and the infrared image determination result in the infrared image processing unit 200.

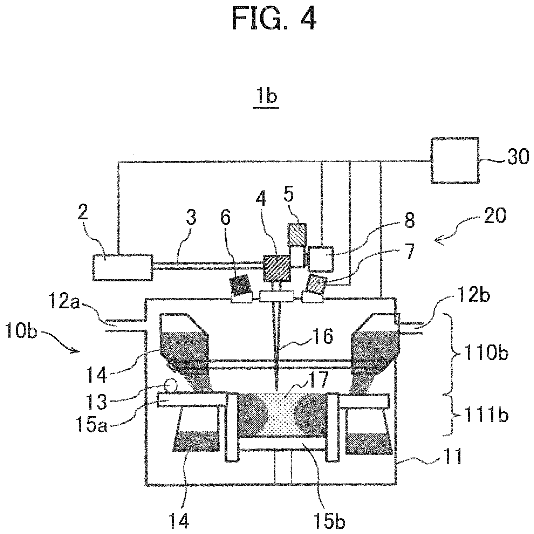

The additive manufacturing device 10a described above is not limited to the aspect illustrated in Fig. 1. Fig. 4 is a schematic view illustrating a second example of the manufacturing system of an additive manufacturing body of the present invention. The raw material powder storage area 110a, the additive manufacturing area 111a, and the raw material powder recovery area 112a are aligned at the same height in Fig.1, but in Fig. 4, a raw material powder storage area 110b is located above an additive manufacturing area 111b. The raw material powder 14 drops from the raw material powder storage area 110b, and is supplied to the additive manufacturing area 111b by the powder feeder 13.

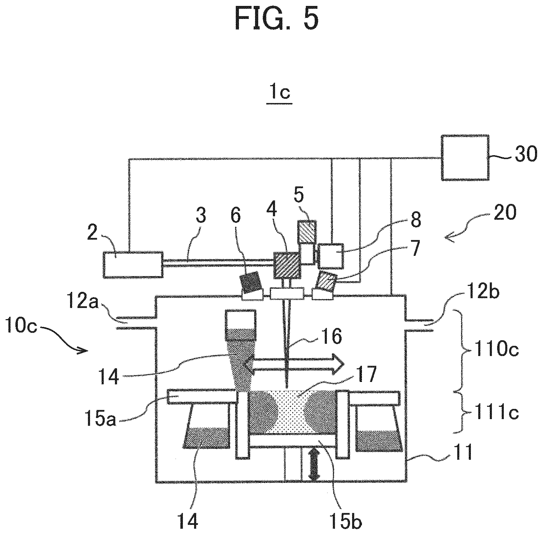

Fig. 5 is a schematic view illustrating a third example of the manufacturing system of an additive manufacturing body of the present invention. A manufacturing system 1c of an additive manufacturing body illustrated in Fig. 5 may have a configuration in which: a raw material powder storage area 110c is located above an additive manufacturing area 111c, similarly in Fig. 4; and the raw material powder storage area 110c also serves as a powder feeder.

### [Manufacturing Method of Additive Manufacturing Body]

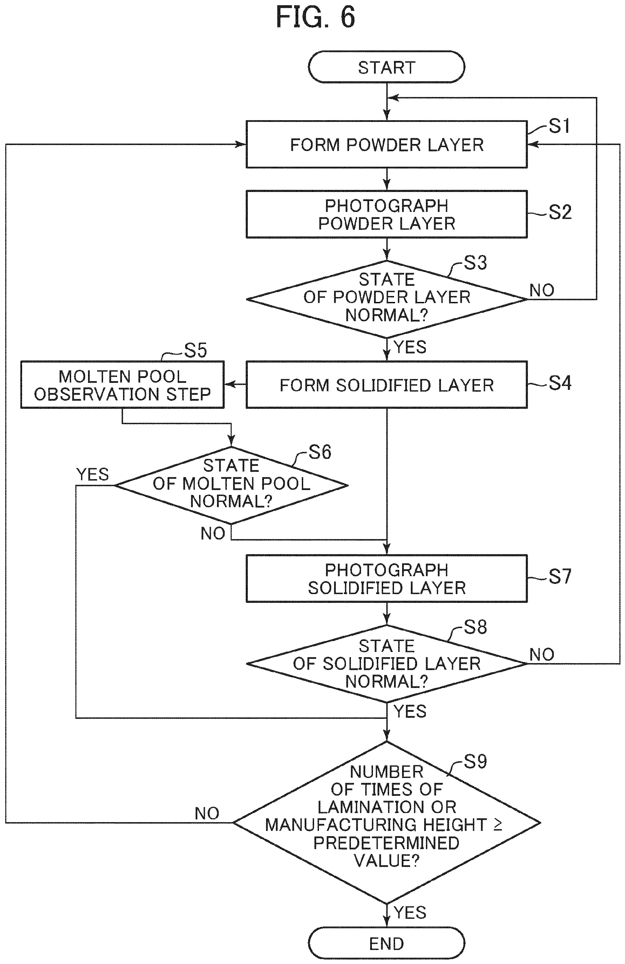

Fig. 6 is a flow chart showing a manufacturing method of an additive manufacturing body of the present invention. Hereinafter, the manufacturing method of an additive manufacturing body of the present invention will be described with reference to Figs. 1 to 3 and 6. First, raw material powder is moved from the raw material powder storage area 110a to the additive manufacturing area 111a by the powder feeder 13 in Fig. 1, so that a powder layer is formed (S1). Next, the powder layer is photographed with the visible light imaging camera 6, so that a visible light image is obtained (S2). The photographing is performed under the photographing conditions stored in the photographing condition database 105 of the visible light image processing unit 100 of the control device 30. Then, it is determined by the visible light image processing unit 100 whether the state of the powder layer is normal or not (the powder layer is good or bad) (S3). The unevenness of an observation area is determined based on threshold data stored in the reference database 103. If a bad determination is made herein, the control device 30 performs a dedicated operation command for retrying the formation of a powder layer, so that the forming a powder layer (S1) and the photographing the powder layer (S2) are performed again. If the number of the repetitions of S1 to S2 reaches a specified number of times, the operation of the additive manufacturing device 10a can be stopped, assuming that an error occurs.

If the state of the powder layer is determined to be normal in S3, the powder layer is solidified by emitting laser light 16 to the powder layer (S4). A molten pool observation step (S5) may be performed during the laser light emitting step. If the state of a molten pool is determined to be normal in the observing the molten pool, it is determined that the solidified layer has been formed normally, so that the next powder layer may be formed by omitting the later-described photographing the solidified layer. If the state of the molten pool is determined not to be normal, some abnormality is often caused in the solidified layer. In conjunction with the later-described determination by an infrared image, it is determined whether the state of the solidified layer is normal or not.

After a solidified layer is formed by solidifying the powder layer, the solidified layer is photographed (S7), so that it is determined whether the state of the solidified layer is normal or not (S8). Observation is performed by image photographing, and uses both the visible light imaging camera 6 and the infrared imaging camera 7. If the solidified layer is determined to be normal and if the number of lamination or the height of an AM body is a predetermined value or more, the manufacturing process is ended. On the other hand, if the solidified layer is determined not to be normal, the conditions of the additive manufacturing process are corrected to start with the formation of a powder layer. It is preferable that the conditions of forming the powder layer at this time are set such that: the thickness of the powder layer is smaller than usual; and all solidified layers are melted more deeply than under the usual conditions. The step (S8) of forming a solidified layer is performed again, and if the solidified layer is determined to be normal, the conditions of the additive manufacturing process can be returned to the usual ones.

As described above, it has been proven that according to the present invention, a manufacturing system of an additive manufacturing body and a manufacturing method of an additive manufacturing body can be provided, by which the accuracy of evaluating a defect during additive manufacturing can be improved and the quality of an additive manufacturing body can be improved. In the present invention, a powder layer or a solidified layer in each of the step of forming a powder layer and the step of forming a solidified layer, the steps being repeated in the additive manufacturing process, can be inspected, and hence the quality of the manufactured AM body can be improved and yield can be improved. Further, in the present invention, the quality of the AM body can be particularly improved in a processing chamber that can control an atmosphere or in an additive manufacturing processing device including a heater.

The present invention is not be limited to the above embodiments, and various modifications are included. For example, the above embodiments have been described in detail for understandably explaining the present invention, and accordingly the invention is not always limited to those including all the configurations described above. Additionally, part of the configuration of an embodiment may be replaced with the configuration of another embodiment, or the configuration of an embodiment may be added with the configuration of another embodiment. Additionally, part of the configuration of each embodiment may be added, deleted, or replaced with another configuration.

### List of Reference Signs

1a, 1b, 1c...manufacturing system of additive manufacturing body, 2...1aser oscillator, 3...process fiber (optical path), 4...galvano head, 5...laser coaxial lighting, 6...visible light imaging camera, 7...infrared imaging camera, 8...molten pool observation machine, 10a, 10b, 10c...additive manufacturing device, 11...processing chamber, 12a...gas supply pipe, 12b...gas exhaust pipe, 13...powder feeder, 14...raw material powder, 15a, 15b...sample table, 16...laser light, 17...AM body, 20...inspection device, 30...control device, 40...visible light transmission lens, 41...lighting for visible light imaging, 42...infrared transmission lens, 43...laser guide lens, 110a, 110b, 110c...raw material powder storage area, 111a, 111b, 111c...additive manufacturing area, 112a...raw material powder recovery area

## Claims

1. A manufacturing system of an additive manufacturing body, the manufacturing system comprising:
an additive manufacturing device that performs an additive manufacturing process in which a step of forming a powder layer by supplying powder and a step of forming a solidified layer by supplying heat to the powder layer from a heat source to melt and solidify the powder are repeatedly performed;
an inspection device having a camera for photographing the powder layer or the solidified layer; and
a control device that controls the additive manufacturing device and the inspection device,
wherein the camera can photograph the powder layer for each step of forming a powder layer, the step being performed repeatedly, or can photograph the solidified layer for each step of forming a solidified layer, the step being performed repeatedly, and
wherein the control device selects a photographing condition of the camera according to a condition of the additive manufacturing process.

2. The manufacturing system of an additive manufacturing body according to claim 1,
wherein the additive manufacturing device has a processing chamber that can control an atmosphere in the additive manufacturing process, and
wherein the control device selects a photographing condition of the camera according to the atmosphere of the processing chamber.

3. The manufacturing system of an additive manufacturing body according to claim 1,
wherein the additive manufacturing device has a heater that can heat the powder layer or the solidified layer, and
wherein the control device selects a photographing condition of the camera according to a temperature of the powder layer or the solidified layer heated by the heater.

4. The manufacturing system of an additive manufacturing body according to any one of claims 1 to 3,
wherein the condition of the additive manufacturing process is a material of the powder, a size of the powder layer, or an amount of heat supplied to the powder layer or the solidified layer from the heat source.

5. The manufacturing system of an additive manufacturing body according to any one of claims 1 to 3,
wherein the photographing condition is a timing of the photographing, an exposure time of the camera, or an emission condition of a light source of the camera.

6. The manufacturing system of an additive manufacturing body according to any one of claims 1 to 3,
wherein the camera is a visible light imaging camera or an infrared imaging camera.

7. The manufacturing system of an additive manufacturing body according to claim 6,
wherein the control device has a visible light image processing unit that processes an image obtained by the visible light imaging camera, and
wherein the visible light image processing unit has: a photographing condition database in which the photographing condition according to the condition of the additive manufacturing process is stored; an image analyzer that analyzes the image obtained by photographing with the visible light imaging camera under the photographing condition; a reference database in which reference data for comparing with the image analyzed by the image analyzer are stored; a determination unit that determines whether the powder layer or the solidified layer is good or bad by comparing the image analyzed by the image analyzer with the reference data; and a storage unit that stores a result determined by the determination unit.

8. The manufacturing system of an additive manufacturing body according to claim 6,
wherein the control device has an infrared image processing unit that processes an image obtained by the infrared imaging camera, and
wherein the infrared image processing unit has: a photographing condition database in which the photographing condition according to the condition of the additive manufacturing process is stored; an image analyzer that analyzes the image obtained by photographing with the infrared imaging camera under the photographing condition; a reference database in which reference data for comparing with the image analyzed by the image analyzer are stored; a determination unit that determines whether the solidified layer is good or bad by comparing the image analyzed by the image analyzer with the reference data; and a storage unit that stores a result determined by the determination unit.

9. A manufacturing method of an additive manufacturing body, comprising the steps of:
forming a powder layer by supplying powder;
photographing the powder layer with a camera;
determining whether a state of the powder layer is good or bad based on an image obtained by the camera;
forming a solidified layer by supplying heat to the powder layer from a heat source to melt and solidify the powder, when the state of the powder layer is determined to be good;
photographing the solidified layer with a camera; and
determining whether a state of the solidified layer is good or bad based on an image obtained by the camera,
wherein a photographing condition of the camera is selected according to conditions of the step of forming the powder layer and the step of forming the solidified layer.

10. The manufacturing method of an additive manufacturing body according to claim 9,
wherein the step of forming a powder layer and the step of forming a solidified layer are performed in a processing chamber that can control an atmosphere, and the photographing condition is selected according to the atmosphere of the processing chamber.

11. The manufacturing method of an additive manufacturing body according to claim 9,
wherein a heater, which can heat the powder layer or the solidified layer in the step of forming a powder layer and the step of forming a solidified layer, is included, and
wherein the photographing condition is selected according to a temperature of the powder layer or the solidified layer heated by the heater.

12. The manufacturing method of an additive manufacturing body according to any one of claims 9 to 11,
wherein conditions of the step of forming a powder layer and the step of forming a solidified layer are a material of the powder, a size of the powder layer, or an amount of input heat supplied from the heat source to the powder layer or the solidified layer.

13. The manufacturing method of an additive manufacturing body according to any one of claims 9 to 11,
wherein the photographing condition is a timing of the photographing, an exposure time of the camera, or an emission condition of a light source of the camera.

14. The manufacturing method of an additive manufacturing body according to any one of claims 9 to 11,
wherein the step of determining whether the state of the powder layer is good or bad: selects the photographing condition according to the condition of the step of forming a powder layer; analyzes an image of the powder layer that is obtained by photographing with the camera under this photographing condition; determines whether the powder layer is good or bad by comparing the analyzed image with reference data; and stores a determined result.

15. The manufacturing method of an additive manufacturing body according to any one of claims 9 to 11,
wherein the step of determining whether the state of the solidified layer is good or bad: selects the photographing condition according to the condition of the step of forming a solidified layer; analyzes an image that is obtained by photographing with the camera under this photographing condition; determines whether the solidified layer is good or bad by comparing the analyzed image with reference data; and stores a determined result.

16. The manufacturing method of an additive manufacturing body according to any one of claims 9 to 11,
wherein the camera is a visible light imaging camera or an infrared imaging camera.
